# EUROPEAN PATENT APPLICATION

(11) **EP 4 830 991 A1**
(43) Date of publication of application: **28.10.2026**
(21) Application number: 26173338.0
(22) Date of filing: 20.04.2026
(51) Int. Cl.: B60N 2/20, B60N 2/18, B60N 2/22, B60N 2/30, B60N 2/34

(54) **SEAT ASSEMBLY FOR MOTOR VEHICLE**

(30) Priority: 21.04.2025 CN 202520771957 U
(71) Applicant: Yanfeng International Automotive Technology Co., Ltd., Shanghai 201306 (CN)
(72) Inventor: ZHONG, Wei, Shanghai, 201306 (CN); TAN, Xuyang, Shanghai, 201306 (CN); LI, Xudong, Shanghai, 201306 (CN); LAN, Shunqiang, Shanghai, 201306 (CN)
(74) Representative: Specht, Jan Peter

(57) **Abstract**

A seat assembly for a motor vehicle comprises: a seat cushion; a seat backrest; and a linkage mechanism configured such that the seat assembly is movable between at least two positions. The linkage mechanism includes a first linkage mechanism for the seat backrest and a second linkage mechanism for the seat cushion. The first linkage mechanism includes a movable end and a restrained end and is configured to be pivotable about a first pivoting portion arranged at the restrained end of the first linkage mechanism. A bottom end of the seat backrest is pivotably connected with the movable end of the first linkage mechanism, so that the seat backrest is pivotable relative to the first linkage mechanism about a second pivoting portion arranged at the movable end of the first linkage mechanism. One end or a part of the second linkage mechanism or one end of the seat cushion is connected with the first linkage mechanism, so that pivoting of the first linkage mechanism is capable of causing a corresponding pivoting of the second linkage mechanism and the seat cushion. This construction may improve the synchronization of height-adjusting operation of the seat assembly and bring more application scenes.

## Description

### TECHNICAL FIELD

The present disclosure relates generally to the technical field of vehicle seats. More particularly, the present disclosure relates to a seat assembly for a motor vehicle.

### Background

The seat assembly for a motor vehicle generally includes a seat cushion and a seat backrest. The seat assembly for a motor vehicle, which is designed to be movable between two or more positions to provide more comfortable riding experiences for an occupant, is well known in the art. For example, some seat assemblies are designed to be movable between a folded position, a designed position, and an easy entry (also referred to as "EZE") position, wherein the seat backrest pivots toward and overlaps with the seat cushion for increasing, for example, trunk space in the motor vehicle in the folded position, and at least the seat backrest of the seat assembly may be tilted forward for increasing access space behind the seat assembly in the easy entry position. Some seat assemblies are also designed to include a lying flat position where the seat backrest pivots away from the seat cushion to be in a substantially horizontal position, so as to form a "bed mode" or a "bed state" to enable the occupant to lie on the seat assembly. Other seat assemblies are also designed to include a "zero-gravity" position where the occupant may sit on the seat assembly in a substantially zero-pressure posture, so as to feel more comfortable.

However, although the seat assembly in the prior art has a certain adjustment ability to realize the shifting of the seat assembly between, for example, a designed position, a folded position, a lying flat position, an easy entry position and a zero-gravity position, there is still room for improvement in the seat assembly in the prior art.

### SUMMARY

The present disclosure relates to a seat assembly for a motor vehicle, comprising: a seat cushion; a seat backrest; and a linkage mechanism configured to move the seat cushion and the seat backrest so that the seat assembly is movable between at least two positions; wherein the linkage mechanism includes a first linkage mechanism for the seat backrest and a second linkage mechanism for the seat cushion; wherein the first linkage mechanism includes at least one restrained end and at least one movable end, and the first linkage mechanism is configured to be pivotable about a first pivoting portion arranged at a corresponding restrained end among the at least one restrained end of the first linkage mechanism, and a bottom end of the seat backrest that is proximate to the seat cushion is pivotably connected with a corresponding movable end among the at least one movable end of the first linkage mechanism, so that the seat backrest is pivotable relative to the first linkage mechanism about a second pivoting portion arranged at the corresponding movable end of the first linkage mechanism; and wherein one end or a part of the second linkage mechanism or one end of the seat cushion that is proximate to the seat backrest is connected with the first linkage mechanism, so that pivoting of the first linkage mechanism is capable of causing a corresponding pivoting of the second linkage mechanism.

According to some embodiments of the present disclosure, the restrained end of the first linkage mechanism is pivotably mounted on a vehicle floor, or pivotably mounted on a slide rail that is slidable relative to the vehicle floor to move the seat assembly, or pivotably mounted on a rotary member that is rotatable relative to the vehicle floor so that the seat assembly rotates about a vertical direction.

According to some embodiments of the present disclosure, the seat assembly includes a first backrest driving device and a second backrest driving device, wherein the first backrest driving device drives the first linkage mechanism to pivot about the first pivoting portion, and the second backrest driving device drives the seat backrest to pivot about the second pivoting portion; and when the first backrest driving device and the second backrest driving device do not work, pivoting of the first linkage mechanism about the first pivoting portion and pivoting of the seat backrest about the second pivoting portion are locked.

According to some embodiments of the present disclosure, the first linkage mechanism includes two single-link linkage mechanisms on left and right sides of the seat assembly respectively, wherein each single-link linkage mechanism only includes a single linkage, each linkage includes a movable end and a restrained end that is pivotably mounted on the vehicle floor, the slide rail or the rotary member, and the bottom end of the seat backrest that is proximate to the seat cushion is connected with the movable end of each linkage of the first linkage mechanism, and wherein the one end or the part of the second linkage mechanism or the one end of the seat cushion that is proximate to the seat backrest is connected with the linkage of the first linkage mechanism.

According to some embodiments of the present disclosure, each linkage of the first linkage mechanism includes a first member and a second member which are fixed to each other to form the linkage.

According to some embodiments of the present disclosure, the first linkage mechanism includes two four-link linkage mechanisms on left and right sides of the seat assembly respectively, each four-link linkage mechanism includes a first linkage, a second linkage and a third linkage, wherein the first linkage includes a restrained end and a movable end, the second linkage includes a restrained end and a movable end, and the third linkage includes a first foot, a second foot and a third foot, wherein the restrained end of the first linkage and the restrained end of the second linkage are pivotably mounted on the vehicle floor, the slide rail or the rotary member, the movable end of the first linkage and the movable end of the second linkage are pivotably connected with the first foot and the second foot of the third linkage respectively, and the bottom end of the seat backrest that is proximate to the seat cushion is pivotably connected with the third foot of the third linkage; and wherein the one end or the part of the second linkage mechanism or the one end of the seat cushion that is proximate to the seat backrest is connected with one of the first linkage and the second linkage of the first linkage mechanism.

According to some embodiments of the present disclosure, the first backrest driving device drives at least one of the first linkage and the second linkage so that the first linkage and the second linkage pivot about the first pivoting portions at respective restrained ends, and the second backrest driving device drives the seat backrest to pivot about the second pivoting portion at the third foot of the third linkage.

According to some embodiments of the present disclosure, each of the first backrest driving device and the second backrest driving device includes an electric motor and a recliner.

According to some embodiments of the present disclosure, the second linkage mechanism includes a first linkage, a second linkage and a third linkage, wherein the first linkage of the second linkage mechanism includes a first movable end and a second movable end, the second linkage of the second linkage mechanism includes a first movable end and a second movable end, and the third linkage of the second linkage mechanism includes a restrained end and a movable end, wherein the first movable end of the first linkage of the second linkage mechanism is pivotably connected with the first linkage mechanism, one end of the seat cushion that is proximate to the seat backrest is pivotably connected with the second movable end of the first linkage of the second linkage mechanism, and another end of the seat cushion that is remote from the seat backrest is pivotably connected with the first movable end of the second linkage of the second linkage mechanism, the second movable end of the second linkage of the second linkage mechanism is pivotably connected with the movable end of the third linkage of the second linkage mechanism, and the restrained end of the third linkage of the second linkage mechanism is pivotably mounted on the vehicle floor, the slide rail or the rotary member.

According to some embodiments of the present disclosure, the seat assembly includes a first cushion driving device and a second cushion driving device, wherein the first cushion driving device drives the first linkage of the second linkage mechanism so that the first linkage of the second linkage mechanism is also pivotable relative to the first linkage mechanism, and the second cushion driving device drives one of the second linkage and the third linkage of the second linkage mechanism.

According to some embodiments of the present disclosure, one of the second linkage and the third linkage of the second linkage mechanism is configured as a zero-gravity linkage for realizing a zero-gravity position of the seat assembly.

According to some embodiments of the present disclosure, the seat assembly is configured to be movable between a designed position, a height-adjusted position, a first zero-gravity position, a second zero-gravity position, a first folded position, a second folded position, a first lying flat position, a second lying flat position and an easy entry position, in the designed position, the seat backrest of the seat assembly forms a predetermined angle relative to the seat cushion for supporting the occupant; in the height-adjusted position, the seat cushion of the seat assembly is raised or lowered by a predetermined height in a height direction compared with the designed position; in the first zero-gravity position and the second zero-gravity position, the seat assembly is adjusted to a designed zero-pressure state, wherein the second zero-gravity position is higher than the first zero-gravity position; in the first folded position and the second folded position, the seat backrest of the seat assembly is substantially overlapped with the seat cushion to increase a space of the motor vehicle, wherein a rear portion of the seat assembly is higher in the second folded position than in the first folded position, so that the seat assembly is capable of serving as a pedal for a rear occupant; in the first lying flat position and the second lying flat position, the seat backrest of the seat assembly is substantially flush with the seat cushion, wherein the second lying flat position is higher than the first lying flat position; and in the easy entry position, the seat backrest of the seat assembly pivots towards the seat cushion by a predetermined angle relative to the designed position and/or the seat cushion moves forward by a predetermined distance relative to the designed position, so as to increase a space behind the seat assembly to facilitate access of an occupant.

According to some embodiments of the present disclosure, the first cushion driving device is selected from at least one of a direct drive motor, a combination of a direct drive motor and a sector rack, a lead screw motor, and a combination of a direct drive motor and a spur rack.

According to some embodiments of the present disclosure, the first linkage of the second linkage mechanism is composed of two members that are fixed to each other.

According to some embodiments of the present disclosure, the second linkage mechanism includes a first linkage and a second linkage, wherein the first linkage of the second linkage mechanism includes a first movable end and a second movable end, and the second linkage of the second linkage mechanism includes a restrained end and a movable end, wherein the first movable end of the first linkage of the second linkage mechanism is pivotably connected with a corresponding linkage of the first linkage mechanism, the restrained end of the second linkage of the second linkage mechanism is pivotably mounted on the vehicle floor, the slide rail or the rotary member, and one end of the seat cushion that is proximate to the seat backrest is pivotably connected with the second movable end of the first linkage of the second linkage mechanism, and another end of the seat cushion that is remote from the seat backrest is pivotably connected with the movable end of the second linkage of the second linkage mechanism.

According to some embodiments of the present disclosure, the second linkage mechanism includes a first linkage and a second linkage, wherein the first linkage of the second linkage mechanism includes a first movable end and a second movable end, and the second linkage of the second linkage mechanism includes a restrained end and a movable end, wherein one end of the seat cushion that is proximate to the seat backrest is pivotably connected with a corresponding linkage of the first linkage mechanism, another end of the seat cushion that is remote from the seat backrest is pivotably connected with the first movable end of the first linkage of the second linkage mechanism, the second movable end of the first linkage of the second linkage mechanism is pivotably connected with the movable end of the second linkage of the second linkage mechanism, and the restrained end of the second linkage of the second linkage mechanism is pivotably mounted on the vehicle floor, the slide rail or the rotary member.

According to some embodiments of the present disclosure, the second linkage of the second linkage mechanism is configured as a zero-gravity linkage for realizing a zero-gravity position of the seat assembly.

According to some embodiments of the present disclosure, the second linkage mechanism includes a chute, a first linkage and a second linkage, wherein the chute is fixed on a corresponding linkage of the first linkage mechanism, one end of the seat cushion that is proximate to the seat backrest is slidably arranged in the chute, the first linkage of the second linkage mechanism includes a first movable end and a second movable end, and the second linkage of the second linkage mechanism includes a movable end and a restrained end, wherein another end of the seat cushion that is remote from the seat backrest is pivotably connected with the first movable end of the first linkage of the second linkage mechanism, the second movable end of the first linkage of the second linkage mechanism is pivotably connected with the movable end of the second linkage of the second linkage mechanism, and the restrained end of the second linkage of the second linkage mechanism is pivotably mounted on the vehicle floor, the slide rail or the rotary member.

According to some embodiments of the present disclosure, the second linkage of the second linkage mechanism is configured as a zero-gravity linkage for realizing a zero-gravity position of the seat assembly.

According to some embodiments of the present disclosure, the second linkage mechanism includes a chute and a first linkage, wherein the chute is fixed on a corresponding linkage of the first linkage mechanism, and one end of the seat cushion that is proximate to the seat backrest is slidably arranged in the chute, and the first linkage of the second linkage mechanism includes a restrained end and a movable end, wherein another end of the seat cushion that is remote from the seat backrest is pivotably connected with the movable end of the first linkage of the second linkage mechanism, and the restrained end of the first linkage of the second linkage mechanism is pivotably mounted on the vehicle floor, the slide rail or the rotary member.

It should be noted that aspects of the present disclosure described relative to one embodiment or clause may be included in other different embodiments or clauses, although they are not specifically described relative to the other different embodiments or clauses. In other words, all embodiments or clauses and/or features of any embodiment or clause may be combined in any way and/or combination, as long as they are not contradictory to each other.

It is to be noted that, various aspects of the present disclosure described with respect to one embodiment or clause may be incorporated into other different embodiments or clauses, although not specifically described with respect to the other different embodiments or clauses. In other words, all of the embodiments or clauses and/or features in any embodiments or clauses may be combined in any manner and/or combination, as long as they are not contradictory to one another.

### BRIEF DESCRIPTION OF THE DRAWINGS

After reading the following detailed description in conjunction with the accompanying drawings, a plurality of aspects of the present invention will be better understood. In the accompanying drawings:
Fig. 1 is a schematic side view of a seat assembly for a motor vehicle according to a first embodiment of the present disclosure, in which a schematic view of the principles of a linkage mechanism of the seat assembly in this embodiment is also shown;
Fig. 2 is a schematic perspective view of the seat assembly for a motor vehicle according to the first embodiment of the present disclosure, in which the seat assembly is in its designed position, and the outer cladding layer of the seat assembly is removed to show an inner framework;
Fig. 3a is a structural view of a seat cushion and a linkage mechanism of the seat assembly shown in Fig. 2, in which the seat backrest is removed;
Fig. 3b is an exploded view of the seat cushion and the linkage mechanism of the seat assembly shown in Fig. 3a;
Figs. 4a and 4b are schematic views of the seat assembly and its linkage mechanism in a height-adjusted position according to the first embodiment of the present disclosure respectively, in which Fig. 4a also shows the comparison of the seat assembly in the designed position and in the height-adjusted position;
Figs. 5a and 5b are schematic views of the seat assembly and its linkage mechanism in a first zero-gravity position according to the first embodiment of the present disclosure respectively;
Figs. 6a and 6b are schematic views of the seat assembly and its linkage mechanism in a second zero-gravity position (also referred to as a "high zero-gravity position") according to the first embodiment of the present disclosure, in which Fig. 6a also shows the comparison of the seat assembly in the first zero-gravity position and in the second zero- gravity position;
Figs. 7a and 7b are schematic views of the seat assembly and its linkage mechanism in a first folded position according to the first embodiment of the present disclosure respectively;
Figs. 8a and 8b are schematic views of the seat assembly and its linkage mechanism in a second folded position (also referred to as a "high folded position") according to the first embodiment of the present disclosure respectively;
Fig. 8c is a schematic view when the seat assembly in the second folded position is used as a pedal;
Figs. 9a and 9b are schematic views of the seat assembly and its linkage mechanism in a first lying flat position according to the first embodiment of the present disclosure respectively;
Figs. 10a and 10b are schematic views of the seat assembly and its linkage mechanism in a second lying flat position (also referred to as a "high lying flat position" or a "high bed position") according to the first embodiment of the present disclosure respectively;
Fig. 10c shows the comparison of the seat assembly in the first lying flat position and in the second lying flat position;
Figs. 11a and 11b are schematic views of the seat assembly and its linkage mechanism in an easy entry position according to the first embodiment of the present disclosure respectively;
Fig. 12 is a schematic side view of a seat assembly for a motor vehicle according to a second embodiment of the present disclosure, in which a schematic view of the principles of a linkage mechanism of the seat assembly in this embodiment is also shown;
Fig. 13 is a schematic side view of a seat assembly for a motor vehicle according to a third embodiment of the present disclosure, in which a schematic view of the principles of a linkage mechanism of the seat assembly in this embodiment is also shown;
Fig. 14 is a schematic side view of a seat assembly for a motor vehicle according to a fourth embodiment of the present disclosure, in which a schematic view of the principles of a linkage mechanism of the seat assembly in this embodiment is also shown;
Fig. 15 is a schematic side view of a seat assembly for a motor vehicle according to a fifth embodiment of the present disclosure, in which a schematic view of the principles of a linkage mechanism of the seat assembly in this embodiment is also shown;
Fig. 16 is a schematic side view of a seat assembly for a motor vehicle according to a sixth embodiment of the present disclosure, in which a schematic view of the principles of a linkage mechanism of the seat assembly in this embodiment is also shown;
Figs. 17 to 20 are schematic views of a cushion driving device according to different embodiments of the present disclosure respectively.

It should be understood that, in all the accompanying drawings, the same reference signs indicate the same elements. In the accompanying drawings, for the sake of clarity, dimensions of certain features may be altered rather than being drawn to scale.

### DETAILED EMBODIMENTS

The present disclosure will be described below with reference to the accompanying drawings, in which several embodiments of the present disclosure are shown. However, it should be understood that, the present disclosure which may be in multiple different ways of presentation, is not limited to the embodiments described below. In fact, the embodiments described below are intended to make the disclosure of the present disclosure more complete and to adequately explain the protection scope of the present disclosure to those skilled in the art. It should also be understood that, the embodiments disclosed herein can be combined in various ways to provide more additional embodiments.

It should be understood that, the wording in the specification which is only used for describing particular embodiments, is not intended to define the present disclosure. All the terms used in the specification (including technical terms and scientific terms) have the meanings as normally understood by those skilled in the art, unless otherwise defined. For the sake of conciseness and/or clarity, the well-known functions or constructions may not be described in detail any longer.

The singular forms "a/an", "said" and "the" as used in the specification, unless clearly indicated, all contain the plural forms. The wordings "comprising", "containing" and "including" used in the specification indicate the presence of the claimed features, but do not exclude the presence of one or more other features. The wording "and/or" as used in the specification includes any and all combinations of one or more of the relevant items listed.

In the specification, when one element is referred to as being located "on" another element, "attached to" another element, "connected to" another element, "coupled to" another element, or "in contact with" another element, the element may be directly located on another element, attached to another element, connected to another element, coupled to another element, or in contact with another element, or there may be an intermediate element therebetween.

In the specification, the terms "first", "second", and "third" are used for convenient description only but not intended to be restrictive. Any technical features represented by "first", "second" and "third" are interchangeable.

In the specification, the spatial relation wordings such as "up", "down", "front", "back", "top", and "bottom" may describe a relation of one feature with another feature in the accompanying drawings. It should be understood that, the spatial relation wordings also contain different orientations of the apparatus during the use or operation, in addition to containing the orientations shown in the accompanying drawings. For example, when an apparatus in the accompanying drawings is inverted, the features previously described as being "below" other features may be described to be "above" other features at this time. The apparatus may also be otherwise oriented (rotated by 90 degrees or at other orientations), and at this time, the relative spatial relations will be explained correspondingly.

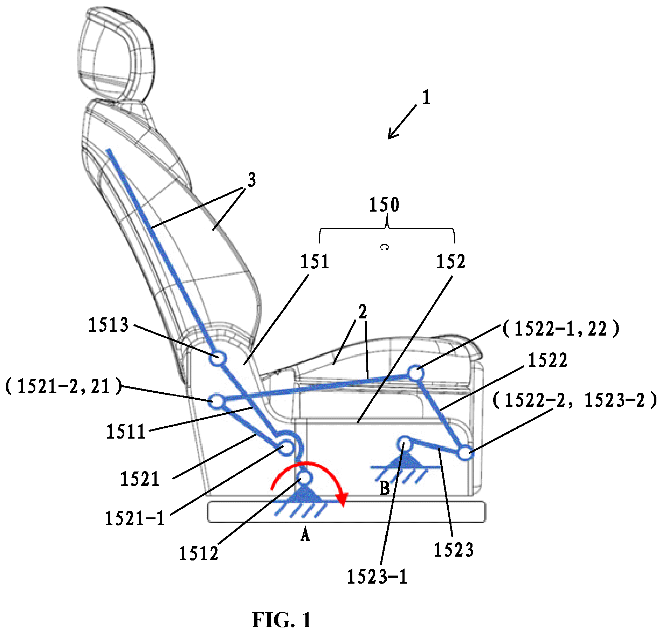

The present disclosure relates to a seat assembly for a motor vehicle, which is movable between two or more positions to achieve corresponding functions. As shown in Fig. 1, the seat assembly 1 according to the present disclosure may include a seat cushion 2 and a seat backrest 3. The seat assembly 1 according to the present disclosure may further include a linkage mechanism configured to move the seat cushion 2 and the seat backrest 3 so as to realize the movement of the seat assembly 1 between two or more positions.

The linkage mechanism of the seat assembly 1 according to the present disclosure may include a first linkage mechanism for the seat backrest 3 and a second linkage mechanism for the seat cushion 2. The first linkage mechanism may include at least one restrained end and at least one movable end. The restrained end of the first linkage mechanism may be pivotably mounted on a vehicle floor, or pivotably mounted on a slide rail that is slidable relative to the vehicle floor to move the seat assembly 1, or pivotably mounted on a rotary member that is rotatable relative to the vehicle floor to rotate the seat assembly 1 about a vertical direction. The first linkage mechanism may be configured to be pivotable about a first pivoting portion arranged at a corresponding restrained end among the at least one restrained end of the first linkage mechanism. For example, the first linkage mechanism may be driven by a first backrest driving device (for example, an electric motor and/or a recliner) to pivot about a first pivoting portion arranged at its corresponding restrained end, so as to drive the at least one movable end of the first linkage mechanism to move or swing.

The bottom end (the end proximate to the seat cushion 2) of the seat backrest 3 may be pivotably connected with a corresponding movable end of the first linkage mechanism. On one hand, this enables the seat backrest 3 to move or swing correspondingly with the movement or swing of the movable end of the first linkage mechanism. On the other hand, this also enables the seat backrest 3 to pivot relative to the first linkage mechanism about a second pivoting portion arranged at a corresponding movable end of the first linkage mechanism. The pivoting of the seat backrest 3 relative to the first linkage mechanism about the second pivoting portion may be driven by a second backrest driving device (for example, an electric motor and/or a recliner). Therefore, the seat backrest 3 of the seat assembly 1 according to the present disclosure may be referred to as a "dual-driven" seat backrest. In the embodiments according to the present disclosure, when the first backrest driving device and the second backrest driving device do not work, the pivoting of the first linkage mechanism about the first pivoting portion and the pivoting of the seat backrest 3 about the second pivoting portion may be locked, so that the seat backrest 3 cannot be moved.

One end or a part of the second linkage mechanism for the seat cushion 2 may be connected with the first linkage mechanism, so that the pivoting of the first linkage mechanism may cause a corresponding pivoting of the second linkage mechanism and the seat cushion. Alternatively, one end of the seat cushion 2 that is proximate to the seat backrest 3 may be connected with the first linkage mechanism, so that the pivoting of the first linkage mechanism may cause a corresponding pivoting of the second linkage mechanism and the seat cushion. Such construction enables the seat assembly according to the present disclosure to achieve height-adjusting operation by way of the same driving device (for example, the first backrest driving device), that is, the seat backrest and the seat cushion of the seat assembly may be simultaneously raised or lowered by way of the same driving device. In this way, it is possible to avoid the asynchronous problem that occurs during the height-adjusting operation of the prior art seat assembly and caused by separately driving the seat backrest and seat cushion, thereby improving the synchronization of height-adjusting operation and improving the somatosensory comfort of the seat assembly in the height-adjusted position.

In addition, in some embodiments, in the case where one end or a part of the second linkage mechanism for the seat cushion 2 is connected with the first linkage mechanism, or one end of the seat cushion 2 that is proximate to the seat backrest 3 is connected with the first linkage mechanism, the second linkage mechanism or the seat cushion may also be driven to pivot relative to the first linkage mechanism by way of the cushion driving device, so that new application scenes (for example, in a high-positioned zero-pressure state, as a high-positioned bed, as a pedal, or the like) may be added for the seat assembly according to the present disclosure, which will be described in detail below.

Referring to Figs. 1 to 3b, the seat assembly 1 according to a first embodiment of the present disclosure is shown. The linkage mechanism 150 of the seat assembly 1 includes a first linkage mechanism 151 for the seat backrest 3 and a second linkage mechanism 152 for the seat cushion 2.

In the first embodiment, the first linkage mechanism 151 may include two "single-link" linkage mechanisms arranged on each of left and right sides of the seat assembly 1. As shown in Fig. 1, each "single-link" linkage mechanism of the first linkage mechanism 151 may include only a single linkage 1511. Each linkage 1511 includes a restrained end 1512 and a movable end 1513. At a position A shown in Fig. 1, the restrained end 1512 of the linkage 1511 may be pivotably mounted on a vehicle floor, or pivotably mounted on a slide rail that is slidable relative to the vehicle floor to move the seat assembly 1, or pivotably mounted on a rotary member that is rotatable relative to the vehicle floor to rotate the seat assembly 1 about a vertical direction. The linkage 1511 may be driven by a first backrest driving device (for example, an electric motor and/or a recliner) to pivot about a first pivoting portion arranged at the restrained end 1512, so as to drive the movable end 1513 of the linkage 1511 of the first linkage mechanism 151 to move or swing. In some embodiments, the two linkages 1511 of the first linkage mechanism 151 may be driven by the same first backrest driving device to move synchronously, for example, driven by a single electric motor to move synchronously via two recliners that are connected to each other. The bottom end of the seat backrest 3 may be pivotably connected with the movable end 1513 of the linkage 1511 of the first linkage mechanism 151, so that on one hand, the seat backrest 3 is movable or swingable correspondingly along with the movement or swing of the movable end 1513 of the linkage 1511 of the first linkage mechanism 151, and on the other hand, the seat backrest 3 is pivotable relative to the first linkage mechanism 151 (more specifically, relative to its linkage 1511) about a second pivoting portion arranged at the movable end 1513 of the first linkage mechanism 151. The pivoting of the seat backrest 3 relative to the first linkage mechanism 151 about the second pivoting portion may be conducted by the driving of a second backrest driving device (for example, an electric motor and/or a recliner). In addition, as mentioned previously, when the first backrest driving device and the second backrest driving device do not work, the pivoting of the first linkage mechanism 151 about the first pivoting portion and the pivoting of the seat backrest 3 about the second pivoting portion may be locked, so that the seat backrest 3 cannot be moved.

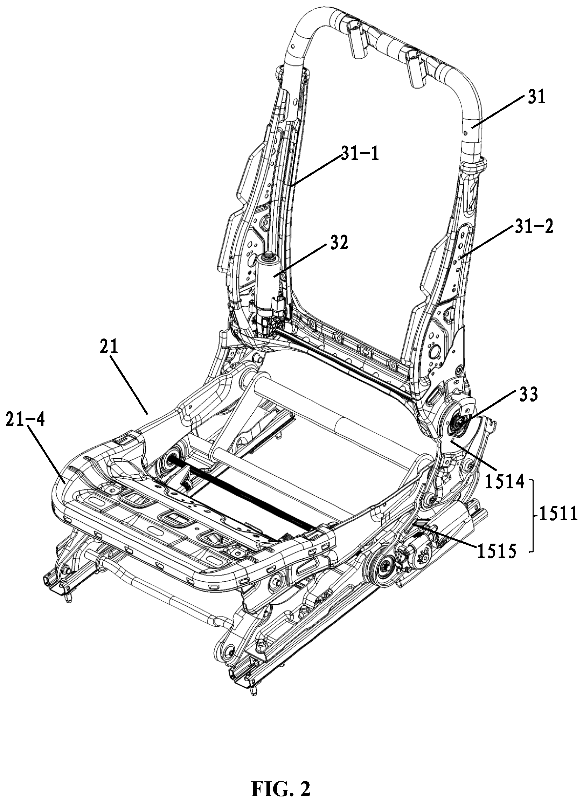

In some embodiments, as shown in Fig. 2, the linkage 1511 may be formed of two members 1514 and 1515. The two members 1514 and 1515 may be fixed to each other (i.e., non-pivotable relative to each other) to form the linkage 1511. This construction facilitates the assembling of the seat assembly 1. For example, during the assembling, the member 1515 may be pivotably mounted on the vehicle floor, the slide rail or the rotary member, and a corresponding first backrest driving device is installed; and then the member 1514 may be pivotably mounted on the seat backrest 3, and a corresponding second backrest driving device is installed. Then, the members 1514 and 1515 may be fixed to each other by a fastener. The operation in this installation method may be more convenient. In other embodiments, the linkage 1511 may also form an integral member.

Returning to Figs. 1 and 2, in the first embodiment, the second linkage mechanism 152 may include a first linkage 1521 (also referred to as a "cushion rear linkage", which is located at a rear portion of the seat cushion 2 that is proximate to the seat backrest 3), a second linkage 1522 (also referred to as a "cushion front linkage", which is located at a front portion of the seat cushion 2 that is remote from the seat backrest 3) and a third linkage 1523 (also referred to as a "zero-gravity linkage", which is configured to adjust the seat assembly 1 to the zero-gravity position). The first linkage 1521 includes a first movable end 1521-1 and a second movable end 1521-2, the second linkage 1522 includes a first movable end 1522-1 and a second movable end 1522-2, and the third linkage 1523 includes a restrained end 1523-1 and a movable end 1523-2. The first movable end 1521-1 of the first linkage 1521 of the second linkage mechanism 152 is pivotably connected with the first linkage mechanism 151 (for example, the linkage 1511 of the first linkage mechanism 151 shown in Fig. 1), so that the pivoting of the first linkage mechanism 151 may cause a corresponding pivoting of the second linkage mechanism 152 and the seat cushion 2. At a position B as shown in Fig. 1, the restrained end 1523-1 of the third linkage 1523 may be pivotably mounted on the vehicle floor, or pivotably mounted on a slide rail that is slidable relative to the vehicle floor to move the seat assembly 1, or pivotably mounted on a rotary member that is rotatable relative to the vehicle floor to rotate the seat assembly 1 about a vertical direction. One end 21 (also referred to as a "rear end") of the seat cushion 2 of the seat assembly 1 that is proximate to the seat backrest 3 is pivotably connected with the second movable end 1521-2 of the first linkage 1521, and another end 22 (also referred to as a "front end") of the seat cushion 2 of the seat assembly 1 that is remote from the seat backrest 3 is pivotably connected with the first movable end 1522-1 of the second linkage 1522. The second movable end 1522-2 of the second linkage 1522 is pivotably connected with the movable end 1523-2 of the third linkage 1523. Since the first movable end 1521-1 of the first linkage 1521 is pivotably connected with the first linkage mechanism 151, in this embodiment, the first linkage 1521, the second linkage 1522 and the third linkage 1523 of the second linkage mechanism 152, the seat cushion 2, the first linkage mechanism 151, as well as the members (the vehicle floor, the slide rail, or the rotary member) on which the restrained end of the first linkage mechanism 151 and the restrained end 1523-1 of the third linkage 1523 of the second linkage mechanism 152 are mounted constitute the so-called "six-link" linkage mechanism.

The first linkage 1521 may be driven by a first cushion driving device (for example, an electric motor and/or a recliner) to pivot about a third pivoting portion arranged at the first movable end 1521-1. The third linkage 1523 may be driven by a second cushion driving device (for example, an electric motor and/or a recliner) to pivot about a fourth pivoting portion arranged at the restrained end 1523-1. Each of the pivoting of the first linkage 1521 about the third pivoting portion arranged at the first movable end 1521-1 and the pivoting of the third linkage 1523 about the fourth pivoting portion arranged at the restrained end 1523-1 may cause the seat cushion 2 to move or swing correspondingly, so as to move the seat cushion 2 to a desired position. When the first seat cushion driving device and/or the second seat cushion driving device do not work, correspondingly, the pivoting of the first linkage 1521 about the third pivoting portion arranged at the first movable end 1521-1 and/or the pivoting of the third linkage 1523 about the fourth pivoting portion arranged at the restrained end 1523-1 may be locked, so that the seat cushion 2 can be moved in a restricted manner or cannot be moved at all.

Although the third linkage 1523 in the first embodiment is configured as a zero-gravity linkage for realizing a zero-gravity position of the seat assembly 1, the present disclosure is not limited thereto. It is also possible to construct the second linkage 1522 configured as a zero-gravity linkage for realizing the zero-gravity position of the seat assembly 1.

In the first embodiment, the second linkage mechanism 152 may include two first linkages 1521, two second linkages 1522 and two third linkages 1523, which are arranged on the left and right sides of the seat assembly 1 respectively. The two first linkages 1521, the two second linkages 1522, or the two third linkages 1523 may be configured to be driven by the same driving device so as to be movable synchronously, for example, driven by a single electric motor to move synchronously via two recliners that are connected to each other.

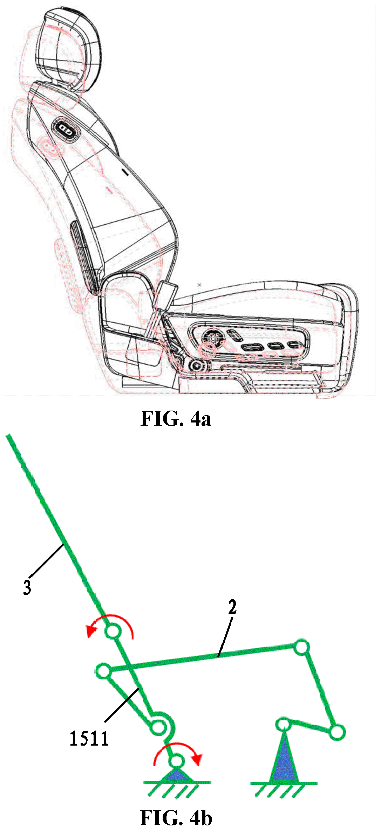

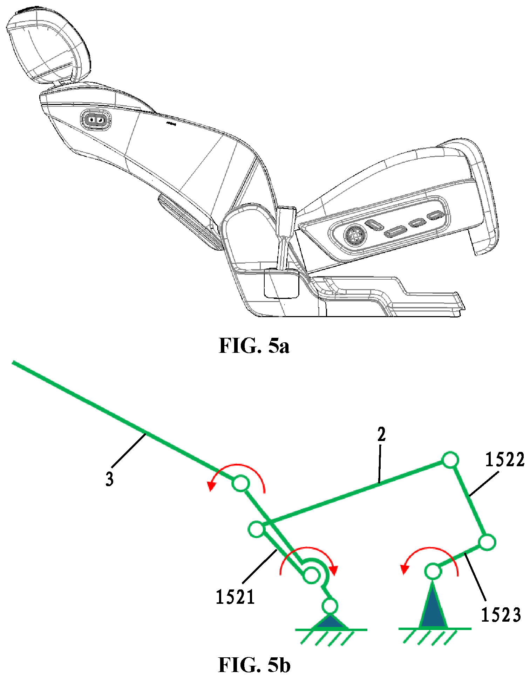

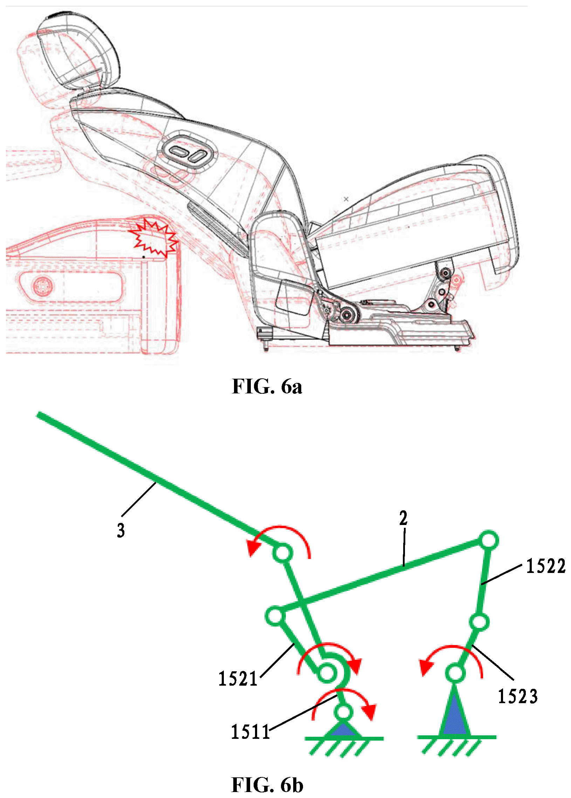

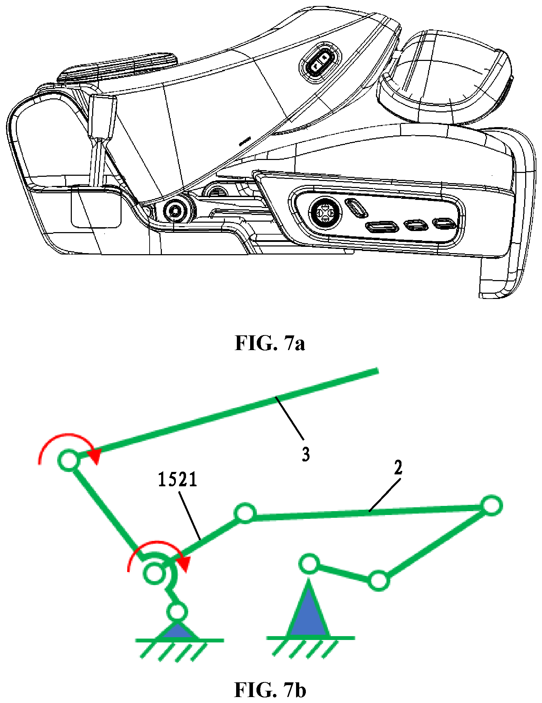

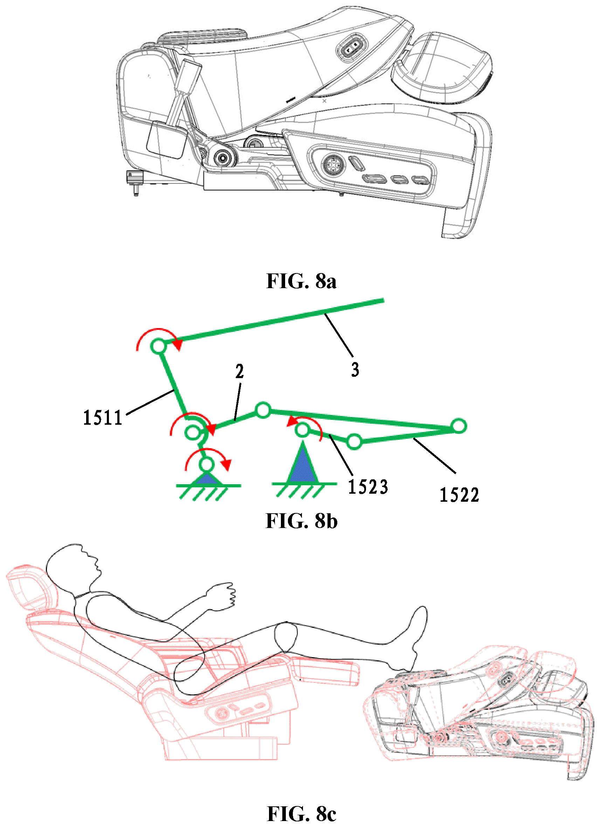

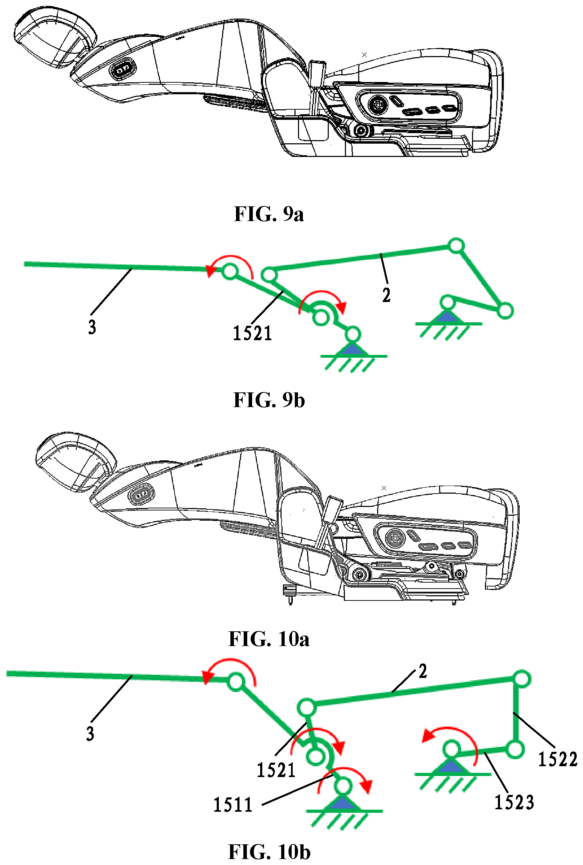

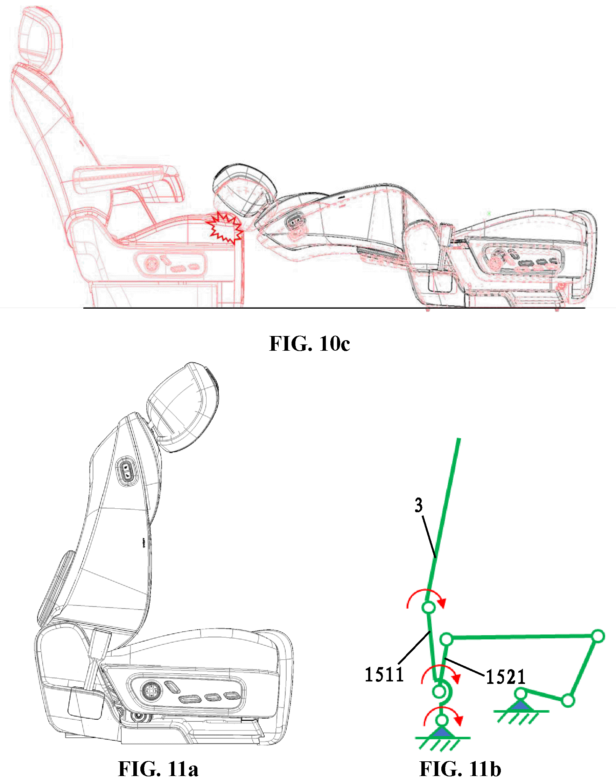

In the first embodiment, by way of the second linkage mechanism 152, the seat assembly 1 according to the present disclosure is movable between a designed position (as shown in Figs. 1 and 2), a height-adjusted position (as shown in Figs. 4a and 4b), a first zero-gravity position (as shown in Figs. 5a and 5b), a second zero-gravity position (also referred to as a "high zero-gravity position" or a "high zero-pressure position", as shown in Figs. 6a and 6b), a first folded position (as shown in Figs. 7a and 7b), a second folded position (also referred to as a "high folded position" as shown in Figs. 8a and 8b), a first lying flat position (as shown in Figs. 9a and 9b), a second lying flat position (also referred to as a "high lying flat position", as shown in Figs. 10a and 10b), and an easy entry (EZE) position (as shown in Figs. 11a and 11b). Compared with the seat assembly in the prior art, the seat assembly 1 according to the present disclosure may flexibly move between more positions, and thus has more application scenes, which will be described in detail below.

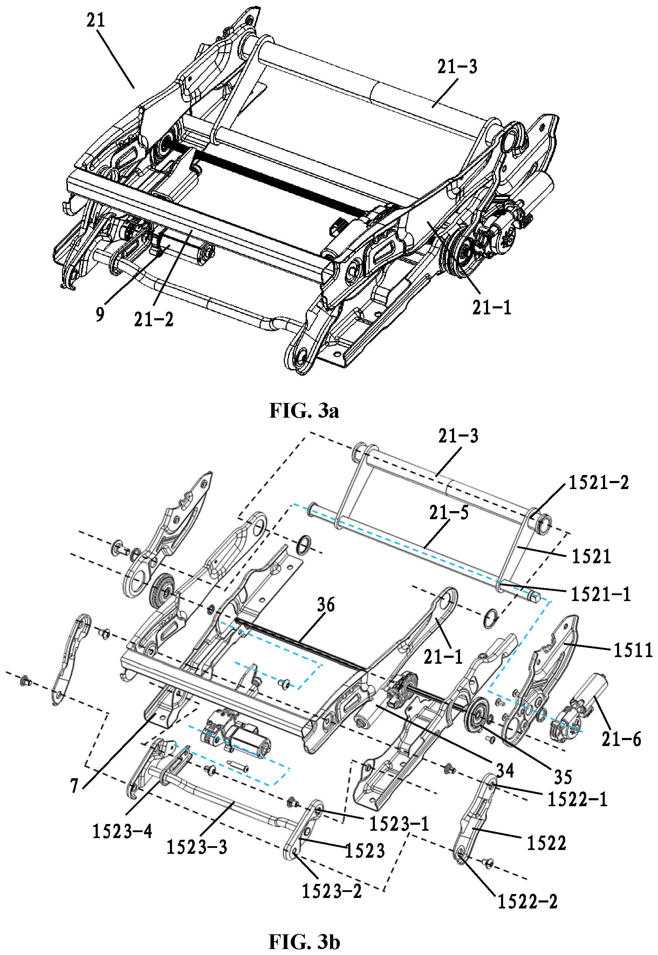

Next, the specific structure of the seat assembly 1 according to the first embodiment of the present disclosure will be described with reference to Figs. 2, 3a and 3b at first.

As described previously, the seat assembly 1 may include a seat cushion 2 and a seat backrest 3. The seat backrest 3 may include a backrest frame 31. The backrest frame 31 may be constructed in a substantially rectangular shape, and may include a first frame member 31-1 and a second frame member 31-2 which are arranged on a left side and a right side relative to a central longitudinal axis of the backrest frame respectively. The movable ends of the linkages of the first linkage mechanism 151 may be pivotably mounted at the bottom end positions of the first frame member 31-1 and the second frame member 31-2 via the second pivoting portions respectively. In some embodiments, the second backrest driving device for driving the seat backrest 3 to pivot relative to the first linkage mechanism about the second pivoting portion 151 mentioned previously may include an electric motor 32 and a recliner 33. The electric motor 32 may be mounted on the backrest frame 31 by a fastener (for example, a bolt). The recliner 33 may include a fixed member and a rotary member that is rotatable relative to the fixed member. The fixed member of the recliner 33 may be fixedly connected (for example, welded) with the linkage of the first linkage mechanism 151, and the rotary member of the recliner 33 may be fixedly connected (for example, welded) with a corresponding portion of the backrest frame 31. In this way, when the rotary member of the recliner 33 rotates relative to the fixed member, it can drive the backrest frame 31 to pivot relative to the linkage of the first linkage mechanism 151. The rotation of the rotary member of the recliner 33 relative to the fixed member is driven by the electric motor 32. The second backrest driving device may include a single electric motor 32 and two recliners 33. The two recliners 33 are mounted on the two sides of the backrest frame 31 respectively, so as to drive the backrest frame 31, from the left side and the right side, to pivot. In order to synchronously drive the two recliners 33 by the single electric motor 32, the two recliners 33 may be connected to each other by a rod. The electric motor 32 may cause the rotary members of the two recliners 33 to rotate synchronously by driving the rod to rotate.

The seat cushion 2 may include a cushion frame 21. The cushion frame 21, which may be constructed in a substantially rectangular shape, may include two lateral connectors (for example, lateral plates) 21-1 located on the left and right sides, a front connector 21-2 (for example, a front transverse pipe or a front transverse bar) for connecting the two lateral connectors at front portions of the two lateral connectors, and a rear connector 21-3 (for example, a rear transverse pipe or a rear transverse bar) for connecting the two lateral connectors at rear portions of the two lateral connectors. The cushion frame 21 may further include a bowl 21-4, which may be supported on the two lateral connectors 21-1 and the front connector 21-2 at front portions of the two lateral connectors.

As shown in Fig. 3b, the second movable ends 1521-2 of the two first linkages 1521 of the second linkage mechanism 152 mentioned previously may be mounted at rear portions of the two lateral connectors 21-1 on the left and right sides of the cushion frame 21, and the first movable ends 1521-1 of the two first linkages 1521 may be pivotably connected to the linkage 1511 of the first linkage mechanism 151 on the left and right sides of the cushion frame 21. The rear connector 21-3 may extend through the second movable ends 1521-2 of the two first linkages 1521 so that the second movable ends 1521-2 of the two first linkages 1521 are mounted at rear portions of the two lateral connectors 21-1. Another connector (for example, a connecting rod) 21-5 may extend through the first movable ends 1521-1 of the two first linkages 1521 so that the first movable ends 1521-1 of the two first linkages 1521 are pivotably connected to the linkages 1511 of the first linkage mechanism 151.

In some embodiments, each first linkage 1521 may be constituted by two members (not shown), which may be fixed to each other. Such construction facilitates the assembling of the seat assembly 1 during the manufacturing process.

As described previously, the seat cushion 2 may include a first cushion driving device for driving the first linkage 1521 of the second linkage mechanism 152 to pivot relative to the linkage 1511 of the first linkage mechanism 151. As shown in Fig. 3b, the first cushion driving device may include an electric motor 21-6.

In addition, as shown in Fig. 3b, the first backrest driving device for driving the linkage 1511 of the first linkage mechanism 151 mentioned previously may include a single electric motor 34 and two recliners 35. The fixed member of each recliner 35 may be mounted on a corresponding linkage 1511 of the first linkage mechanism 151. In order to synchronously drive the two recliners 35 by the single electric motor 34, the two recliners 35 may be connected to each other by a rod 36. The electric motor 34 may drive the rod 36 to rotate, so that the rotary members of the two recliners 35 rotate synchronously.

The second linkage (or cushion front linkage) 1522 of the second linkage mechanism 152 may be pivotably mounted at front portion of the cushion frame 21. The second linkage mechanism 152 may include two second linkages 1522. The first movable ends 1522-1 of the two second linkages 1522 may be pivotably connected with the front portion of the cushion frame 21, and the second movable ends 1522-2 may be pivotably connected with the movable ends 1523-2 of the third linkage 1523 (also referred to as a "zero-gravity linkage") of the second linkage mechanism 152. The restrained end 1523-1 of the third linkage 1523 of the second linkage mechanism 152 may be pivotably mounted (for example, riveted) to, for example, a seat frame mounting bracket 7.

The second linkage mechanism 152 may include two third linkages 1523 spaced apart from each other, and the two third linkages 1523 may be connected together via a connector 1523-3 (for example, a transverse pipe or a transverse bar). The two linkages 1523 and the connector 1523-3 may be, for example, fixed or welded together to form an integral third linkage assembly. The third linkage assembly may include an electric motor mounting bracket 1523-4 for mounting the second cushion driving device 9 (which may be a zero-gravity driving device including a zero-gravity electric motor), which may be arranged at one end of the connector 1523-3.

Next, referring to Figs. 1 and 2 and Figs. 4a to 11b, a movement process of the seat assembly 1 according to the present disclosure from a designed position to other positions will be described.

In the designed position, as shown in Fig. 1, the seat backrest 3 of the seat assembly 1 forms a predetermined angle relative to the seat cushion 2 for supporting the occupant.

In the height-adjusted position, as shown in Fig. 4a, the seat cushion 2 of the seat assembly 1 may be raised or lowered by a predetermined height in a height direction compared with the designed position. As shown in Fig. 4b, in order to move the seat assembly 1 from the designed position to the height-adjusted position, the linkage 1511 of the first linkage mechanism 151 may be driven by the first backrest driving device to pivot towards the seat cushion 2, so that the seat backrest 3 and the seat cushion 2 are raised synchronously. At the same time, the seat backrest 3 may also be driven by the second backrest driving device to pivot away from the seat cushion 2 relative to the first linkage mechanism 151, so that the seat backrest 3 and the seat cushion 2 may still be adjusted to have a predetermined position and a predetermined angle relative to each other in the height-adjusted position, so as to ensure a constant body fitness and thus increase the comfort of the seat assembly 1. Fig. 4a also shows the comparison between the seat assembly in the designed position (indicated by a red dotted line) and the seat assembly in the height-adjusted position (indicated by a black solid line) respectively. In addition, it is also possible to lower the seat assembly 1 by a predetermined height from the designed position to reach the height-adjusted position by performing a reverse operation.

In the first zero-gravity position, as shown in Fig. 5a, the seat assembly 1 is adjusted to a designed zero-pressure state. As shown in Fig. 5b, in order to move the seat assembly 1 from the designed position to the first zero-gravity position, the first linkage 1521 and the zero-gravity linkage (the third linkage 1523 or the second linkage 1522) of the second linkage mechanism 152 may be driven toward each other by the first cushion driving device and the second cushion driving device respectively, so that the rear end of the seat assembly 2 is slightly raised and the front end thereof is raised at a large angle. Then, the seat backrest 3 is driven by the second backrest driving device to pivot away from the seat cushion 2, so as to reach the first zero-gravity position and realize the zero-pressure state.

In some cases, as shown in Fig. 6a, when the seat assembly 1 is in the first zero-gravity position (indicated by a red dotted line in Fig. 6a), the seat backrest 3 might interfere with the rear seat. In order to solve this problem, the seat assembly 1 according to the present disclosure may also be adjusted to a second zero-gravity position which is higher than the first zero-gravity position. In the second zero-gravity position, the seat assembly 1 may still be adjusted to the designed zero-pressure state, but its position is higher, so that it is possible to avoid the interference between its seat backrest and the rear seat. In order to move the seat assembly 1 from the designed position to the second zero-gravity position, as shown in Fig. 6b, the linkage 1511 of the first linkage mechanism 151 may be driven towards the seat cushion 2 by the first backrest driving device on the basis of the first zero-gravity position, so as to raise the seat cushion 2. Then, the first linkage 1521 and the zero-gravity linkage (the third linkage 1523 or the second linkage 1522) of the second linkage mechanism 152 are driven toward each other by the first cushion driving device and the second cushion driving device respectively, and the seat backrest 3 is driven by the second backrest driving device to perform height adjustment for adaptive adjustment, so as to reach the second zero-gravity position and realize the high-positioned zero-pressure state.

In the first folded position, as shown in Fig. 7a, the seat backrest 3 of the seat assembly 1 is substantially overlapped with the seat cushion 2 to increase the space (for example, trunk space) of the motor vehicle. As shown in Fig. 7b, in order to move the seat assembly 1 from the designed position to the first folded position, on one hand, the first linkage 1521 of the second linkage mechanism 152 may be driven by the first cushion driving device to pivot away from the seat backrest 3 (i.e., forward and downward); on the other hand, the seat backrest 3 may be driven by the second backrest driving device to pivot towards the seat cushion 2 until it is substantially overlapped with the seat cushion 2.

The seat assembly 1 according to the present disclosure may also be adjusted to a second folded position which is higher than the first folded position (as shown in Fig. 8a). As shown in Fig. 8c, at least the rear portion of the seat assembly 1 when in the second folded position (indicated by a black solid line in Fig. 8c) is higher than that when in the first folded position (indicated by a red dotted line in Fig. 8c), so that the seat assembly 1 may serve as a pedal of the rear occupant, so as to allow the rear occupant to have a more comfortable riding experience. In order to move the seat assembly 1 from the designed position to the second folded position, as shown in Fig. 8b, the linkage 1511 of the first linkage mechanism 151 may be driven toward the seat cushion 2 by the first backrest driving device on the basis of the first folded position so as to synchronously raise the seat cushion 2 and the seat backrest 3, and the second linkage 1522 or the third linkage 1523 of the second linkage mechanism 152 may be driven by the second cushion driving device to make corresponding height compensation, so as to reach the second folded position and realize the function of a "pedal".

In the first lying flat position, as shown in Fig. 9a, the seat backrest 3 of the seat assembly 1 is substantially flush with the seat cushion 2, so that the occupant may lie down on the seat assembly 1. As shown in Fig. 9b, in order to move the seat assembly 1 from the designed position to the first lying flat position, the seat backrest 3 may be driven by the second backrest driving device to pivot away from the seat cushion 2, so that the seat backrest 3 may be put down backward. Then, the first linkage 1521 of the second linkage mechanism 152 may be driven by the first cushion driving device to raise the seat cushion 2 to a certain height, so as to reach the first lying flat position and realize the function of a "bed".

In some cases, when the seat assembly 1 is in the first lying flat position, the top end of its seat backrest 3 might interfere with the rear seat (as shown by a red dotted line in Fig. 10c). In order to solve this problem, the seat assembly 1 according to the present disclosure may also be adjusted to a second lying flat position (as shown in Fig. 10a) which is at a high position (or "higher") as compared with the first lying flat position. The top end of the seat backrest 3 of the seat assembly 1 when in the second lying flat position (indicated by a black solid line in Fig. 10c) is higher than that when in the first lying flat position (indicated by a red dotted line in Fig. 10c), so as to avoid the interference of the rear seat. In order to move the seat assembly 1 from the designed position to the second lying flat position, as shown in Fig. 10b, the linkage 1511 of the first linkage mechanism 151 may be driven by the first backrest driving device to synchronously raise the seat cushion 2 and the seat backrest 3 on the basis of the first lying flat position, and the first linkage 1521 of the second linkage mechanism 152 and the second linkage 1522 or the third linkage 1523 of the second linkage mechanism 152 may be driven by the first cushion driving device and the second cushion driving device respectively to perform corresponding height compensation, so as to achieve the second folded position and realize the function of a "high-positioned bed".

In the easy entry position, as shown in Fig. 11a, on one hand, the seat cushion 2 of the seat assembly 1 is pivotable forward to move by a certain distance relative to the designed position; on the other hand, the seat backrest 3 of the seat assembly 1 is pivotable toward the seat cushion 2 by a predetermined angle relative to the designed position, so that there is more space behind the seat assembly 1 to facilitate the access of the occupant. As shown in Fig. 11b, in order to move the seat assembly 1 from the designed position to the easy entry position, on one hand, the linkage 1511 of the first linkage mechanism 151 and the seat backrest 3 may be driven by the first backrest driving device and the second backrest driving device respectively to pivot towards the seat cushion 2, so that the seat backrest 3 moves forward towards the seat cushion 2; on the other hand, the first linkage 1521 of the second linkage mechanism 152 may also be driven by the first cushion driving device to continue to pivot away from the seat backrest 3 (i.e., forward), so as to reach the easy entry position and realize the "EZE" function.

Referring to an operation reverse to the operation described above, the seat assembly 1 may also be moved from other positions (i.e., a height-adjusted position, a first zero-gravity position, a second zero-gravity position, a first folded position, a second folded position, a first lying flat position, a second lying flat position, and an easy entry position) to return to the designed position, which will not be described in detail here.

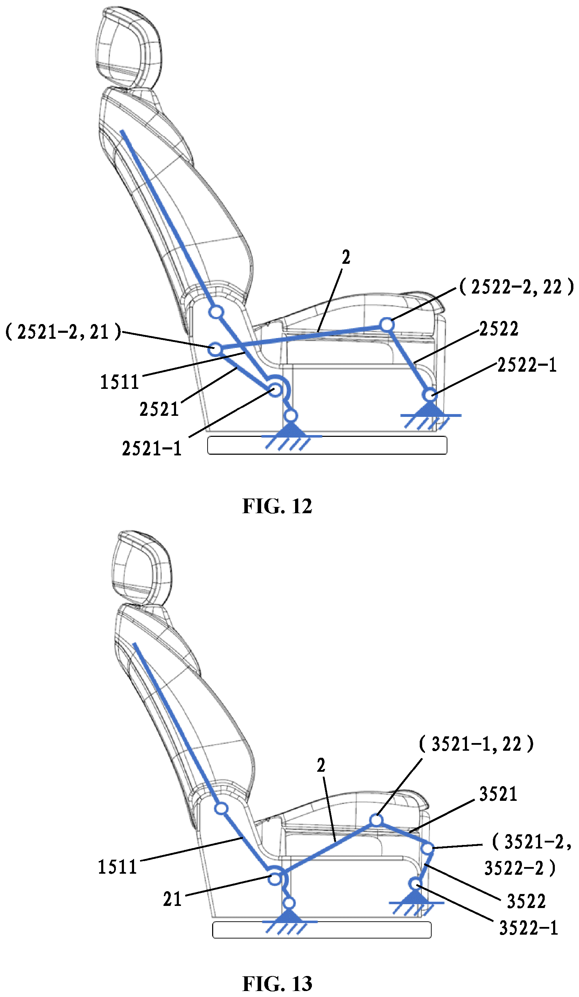

Referring to Figs. 12 to 16, other embodiments of the seat assembly 1 according to the present disclosure will be described.

In the second embodiment shown in Fig. 12, the first linkage mechanism 151 has the same structure as the first linkage mechanism shown in Fig. 1, which will not be described in detail here. The second linkage mechanism 152 includes a first linkage 2521 and a second linkage 2522. The first linkage 2521 includes a first movable end 2521-1 and a second movable end 2521-2, and the second linkage 2522 includes a restrained end 2522-1 and a movable end 2522-2. The first movable end 2521-1 of the first linkage 2521 is pivotably connected with a corresponding linkage (for example, the linkage 1511 shown in Fig. 1) of the first linkage mechanism 151, so that the pivoting of the first linkage mechanism 151 may cause a corresponding pivoting of the second linkage mechanism 152 and the seat cushion 2. The restrained end 2522-1 of the second linkage 2522 may be pivotably mounted on a vehicle floor, or pivotably mounted on a slide rail that is slidable relative to the vehicle floor to move the seat assembly 1, or pivotably mounted on a rotary member that is rotatable relative to the vehicle floor to rotate the seat assembly 1 about a vertical direction. One end 21 (also referred to as a "rear end") of the seat cushion 2 of the seat assembly 1 that is proximate to the seat backrest 3 is pivotably connected with the second movable end 2521-2 of the first linkage 2521, and another end 22 (also referred to as a "front end") of the seat cushion 2 that is remote from the seat backrest 3 is pivotably connected with the movable end 2522-2 of the second linkage 2522. Since the first movable end 2521-1 of the first linkage 2521 is pivotably connected with the first linkage mechanism 151, in this embodiment, the first linkage 2521 and the second linkage 2522 of the second linkage mechanism 152, the seat cushion 2, the first linkage mechanism 151, as well as the members (the vehicle floor, the slide rail, or the rotary member) on which the restrained end of the first linkage mechanism 151 and the restrained end 2522-1 of the second linkage 2522 of the second linkage mechanism 152 are mounted constitute the so-called "five-link" linkage mechanism. In the second embodiment, the seat assembly 1 may at least realize the functions of height adjustment (including a first height adjusted position and a second height adjusted position) and folding (including a first folded position and a second folded position).

In the third embodiment shown in Fig. 13, the first linkage mechanism 151 has the same structure as the first linkage mechanism shown in Fig. 1, which will not be described in detail here. However, in this embodiment, one end 21 (which may also be referred to as a "rear end") of the seat cushion 2 that is proximate to the seat backrest 3 is pivotably connected to the linkage 1511 of the first linkage mechanism 151. The second linkage mechanism 152 includes a first linkage 3521 and a second linkage 3522. The first linkage 3521 includes a first movable end 3521-1 and a second movable end 3521-2, and the second linkage 3522 includes a restrained end 3522-1 and a movable end 3522-2. The first movable end 3521-1 of the first linkage 3521 is pivotably connected with another end 22 (also referred to as a "front end") of the seat cushion 2 of the seat assembly 1 that is remote from the seat backrest 3, and the second movable end 3521-2 of the first linkage 3521 is pivotably connected with the movable end 3522-2 of the second linkage 3522. The restrained end 3522-1 of the second linkage 3522 may be pivotably mounted on a vehicle floor, or pivotably mounted on a slide rail that is slidable relative to the vehicle floor to move the seat assembly 1, or pivotably mounted on a rotary member that is rotatable relative to the vehicle floor to rotate the seat assembly 1 about a vertical direction. In this embodiment, the first linkage 3521 and the second linkage 3522 of the second linkage mechanism 152, the seat cushion 2, the first linkage mechanism 151, as well as the members (the vehicle floor, the slide rail, or the rotary member) on which the restrained end of the first linkage mechanism 151 and the restrained end 3522-1 of the second linkage 3522 of the second linkage mechanism 152 are mounted constitute the so-called "five-link" linkage mechanism. In the third embodiment, the second linkage 3522 of the second linkage mechanism 152 is configured as a zero-gravity linkage, so that the seat assembly 1 may at least realize the functions of height adjustment and zero-pressure.

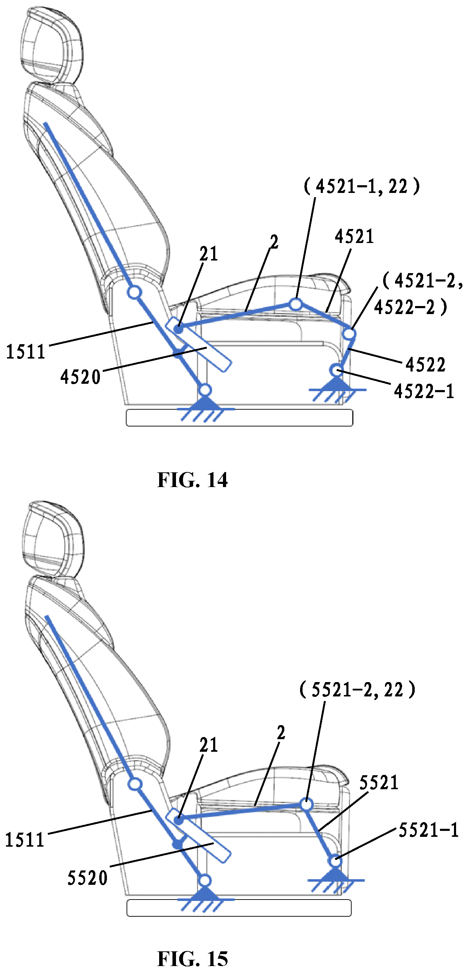

In the fourth embodiment shown in Fig. 14, the first linkage mechanism 151 has the same structure as the first linkage mechanism shown in Fig. 1, which will not be described in detail here. In this embodiment, the second linkage mechanism 152 includes a chute 4520, a first linkage 4521 and a second linkage 4522. The chute 4520 is fixed on the linkage 1511 of the first linkage mechanism 151, and one end 21 (which may also be referred to as a "rear end") of the seat cushion 2 that is proximate to the seat backrest 3 is slidably arranged in the chute 4520. The first linkage 4521 includes a first movable end 4521-1 and a second movable end 4521-2, and the second linkage 4522 includes a restrained end 4522-1 and a movable end 4522-2. The first movable end 4521-1 of the first linkage 4521 is pivotably connected with another end 22 (also referred to as a "front end") of the seat cushion 2 of the seat assembly 1 that is remote from the seat backrest 3, and the second movable end 4521-2 of the first linkage 4521 is pivotably connected with the movable end 4522-2 of the second linkage 4522. The restrained end 4522-1 of the second linkage 4522 may be pivotably mounted on a vehicle floor, or pivotably mounted on a slide rail that is slidable relative to the vehicle floor to move the seat assembly 1, or pivotably mounted on a rotary member that is rotatable relative to the vehicle floor to rotate the seat assembly 1 about a vertical direction. In this embodiment, the first linkage 4521 and the second linkage 4522 of the second linkage mechanism 152, the seat cushion 2, the first linkage mechanism 151, as well as the members (the vehicle floor, the slide rail, or the rotary member) on which the restrained end of the first linkage mechanism 151 and the restrained end 4522-1 of the second linkage 4522 of the second linkage mechanism 152 are mounted constitute the so-called "five-link" linkage mechanism. In the fourth embodiment, the second linkage 4522 of the second linkage mechanism 152 is configured as a zero-gravity linkage, so that the seat assembly 1 may at least realize the functions of folding, height adjustment and zero-pressure.

In the fifth embodiment shown in Fig. 15, the first linkage mechanism 151 has the same structure as the first linkage mechanism shown in Fig. 1, which will not be described in detail here. In this embodiment, the second linkage mechanism 152 includes a chute 5520 and a first linkage 5521. The chute 5520 is fixed on the linkage 1511 of the first linkage mechanism 151, and one end 21 (which may also be referred to as a "rear end") of the seat cushion 2 that is proximate to the seat backrest 3 is slidably arranged in the chute 5520. The first linkage 5521 includes a restrained end 5521-1 and a movable end 5521-2. The movable end 5521-2 of the first linkage 5521 is pivotably connected with another end 22 (also referred to as a "front end") of the seat cushion 2 of the seat assembly 1 that is remote from the seat backrest 3. The restrained end 5521-1 of the first linkage 5521 may be pivotably mounted on a vehicle floor, or pivotably mounted on a slide rail that is slidable relative to the vehicle floor to move the seat assembly 1, or pivotably mounted on a rotary member that is rotatable relative to the vehicle floor to rotate the seat assembly 1 about a vertical direction. In this embodiment, the first linkage 5521 of the second linkage mechanism 152, the seat cushion 2, the first linkage mechanism 151, as well as the members (the vehicle floor, the slide rail, or the rotary member) on which the restrained end of the first linkage mechanism 151 and the restrained end 5521-1 of the first linkage 5521 of the second linkage mechanism 152 are mounted constitute the so-called "four-link" linkage mechanism. In the fifth embodiment, the seat assembly 1 may at least realize the functions of folding and height adjustment.

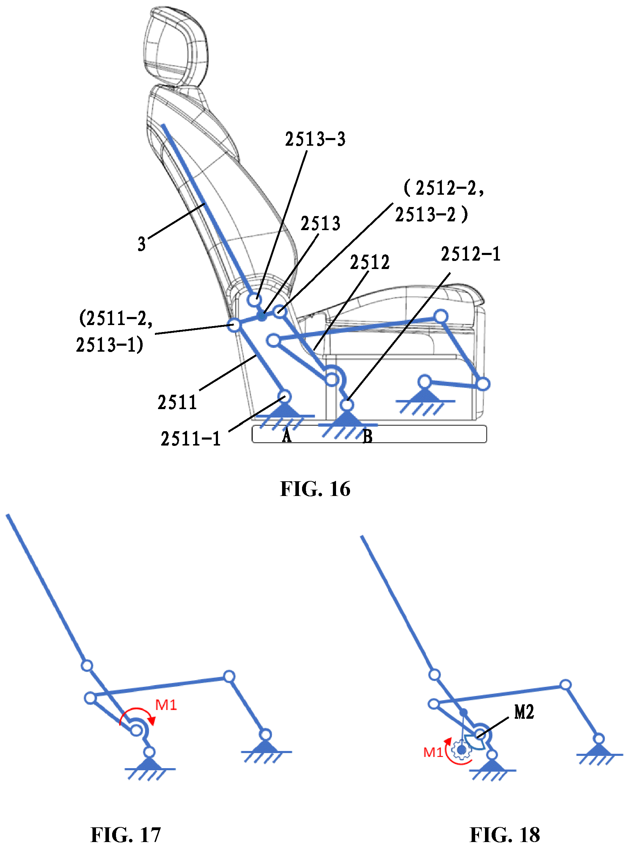

In the sixth embodiment shown in Fig. 16, the second linkage mechanism 152 has the same structure as the second linkage mechanism shown in Fig. 1, which will not be described in detail here. However, in the sixth embodiment, the first linkage mechanism 151 includes two "four-link" linkage mechanisms arranged on the left and right sides of the seat assembly 1 respectively. Each "four-link" linkage mechanism of the first linkage mechanism 151 may include a first linkage 2511, a second linkage 2512 and a third linkage 2513. The first linkage 2511 may include a restrained end 2511-1 and a movable end 2511-2, and the second linkage 2512 may include a restrained end 2512-1 and a movable end 2512-2. The third linkage 2513 may include a first foot 2513-1, a second foot 2513-2 and a third foot 2513-3. For example, the third linkage 2513 may be constructed to be a triangle. However, the present disclosure is not limited thereto, and the third linkage 2513 may also be constructed to be a polygon such as a quadrangle or a pentagon, or other shapes. The restrained end 2511-1 of the first linkage 2511 and the restrained end 2512-1 of the second linkage 2512 may be pivotably mounted on the vehicle floor, or pivotably mounted on a slide rail that is slidable relative to the vehicle floor to move the seat assembly 16, or pivotably mounted on a rotary member that is rotatable relative to the vehicle floor to rotate the seat assembly 1 about a vertical direction, at the position A and the position B shown in Fig. 16 respectively. The movable end 2511-2 of the first linkage 2511 and the movable end 2512-2 of the second linkage 2512 may be pivotably connected with the first foot 2513-1 and the second foot 2513-2 of the third linkage 2513 respectively.

In the sixth embodiment, the first linkage 2511, the second linkage 2512, and the third linkage 2513 of the first linkage mechanism 151, as well as the members (the vehicle floor, the slide rail, or the rotary member) on which the restrained end 2511-1 of the first linkage 2511 and the restrained end 2512-1 of the second linkage 2512 are mounted constitute a so-called "four-link" linkage mechanism. In the sixth embodiment, at least one of the first linkage 2511 and the second linkage 2512 of the first linkage mechanism 151 may be driven by way of the first backrest driving device (for example, an electric motor and/or a recliner), so that the first linkage 2511 and the second linkage 2512 are pivotable about the first pivoting portions arranged at the restrained end 2511-1 of the first linkage 2511 and the restrained end 2512-1 of the second linkage 2512 respectively, so as to drive the movable end 2511-2 of the first linkage 2511 and the movable end 2512-2 of the second linkage 2512 of the first linkage mechanism 151 to move or swing, which in turn drives the third linkage 2513 to move or swing.

In the sixth embodiment, the bottom end of the seat backrest 3 may be pivotably connected with the third foot 2513-3 of the third linkage 2513. On one hand, this enables the seat backrest 3 to move or swing correspondingly along with the movement or swing of the third foot 2513-3 of the third linkage 2513 of the first linkage mechanism 151; on the other hand, this also enables the seat backrest 3 to pivot about a second pivoting portion arranged at the third foot 2513-3 of the third linkage 2513 of the first linkage mechanism 151 relative to the first linkage mechanism 151 (more specifically, relative to the third linkage 2513 of the first linkage mechanism 151). The pivoting of the seat backrest 3 relative to the first linkage mechanism 151 about the second pivoting portion may be driven by the second backrest driving device (for example, an electric motor and/or a recliner). In addition, as mentioned previously, when the first backrest driving device and the second backrest driving device do not work, the pivoting of the first linkage mechanism 151 about the first pivoting portion and the second pivoting portion and the pivoting of the seat backrest 3 about the second pivoting portion may be locked, so that the seat backrest 3 cannot be moved.

In the sixth embodiment, one end (for example, the first movable end of the first linkage of the second linkage mechanism) or a part (for example, the chute of the second linkage mechanism) of the second linkage mechanism 152, or one end of the seat cushion that is proximate to the seat backrest may be connected with either of the first linkage 2511 and the second linkage 2512 of the first linkage mechanism 151.

Compared with the first linkage mechanism including a "single-link" linkage mechanism, the first linkage mechanism including a "four-link" linkage mechanism will be capable of bearing a greater external force or strength. Therefore, the first linkage mechanism 151 including a "four-link" linkage mechanism will be more suitable for application scenes where it withstands high strength.

In other embodiments, the first linkage mechanism 151 and the second linkage mechanism 152 may also be constructed in any other suitable form, and the first linkage mechanism 151 and the second linkage mechanism 152 in different forms (including those shown in the accompanying drawings) may be combined in any suitable manner.

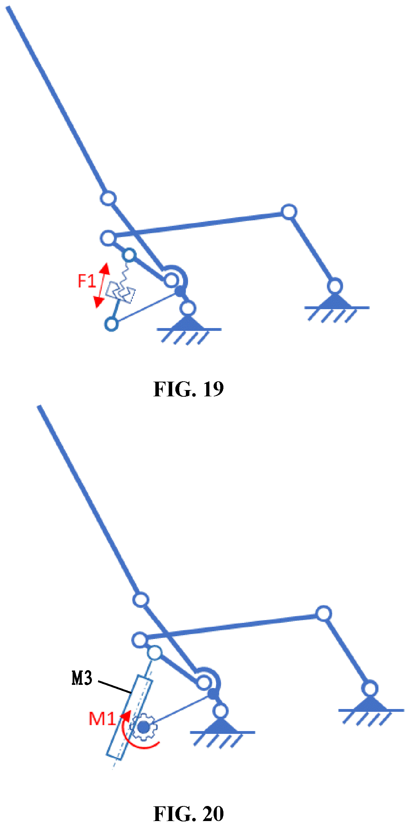

Referring to Figs. 17 to 20, different embodiments of the first cushion driving device are shown. In the embodiment shown in Fig. 17, the first cushion driving device is constructed in the form of a direct drive motor M1. In the embodiment shown in Fig. 18, the first cushion driving device is constructed in the form of a combination of a direct drive motor M1 and a sector rack M2, wherein the direct drive motor M1 includes an output gear which meshes with the sector rack M2 to implement driving. This combination may increase the driving torque of the direct drive motor M1 by reducing its driving speed. In the embodiment shown in Fig. 19, the first cushion driving device is constructed in the form of a lead screw motor F1. In the embodiment shown in Fig. 20, the first cushion driving device is constructed in the form of a direct drive motor M1 and a spur rack M3, wherein the direct drive motor M1 includes an output gear which meshes with the spur rack M3 to implement driving. This combination may also increase the driving torque of the direct drive motor M1 by reducing its driving speed.

In other embodiments, the second cushion driving device, the first backrest driving device and the second backrest driving device may also be selected from any one or more of a direct drive motor, a combination of a direct drive motor and a sector rack, a lead screw motor, a combination of a direct drive motor and a spur rack, or other suitable driving devices.

Exemplary embodiments according to the present disclosure have been described in detail above, with reference to the accompanying drawings. However, those skilled in the art should appreciate that a plurality of changes and modifications may be made to the exemplary embodiments of the present disclosure without departing from the spirit and scope of the present disclosure. All the changes and modifications are encompassed within the protection scope of the present disclosure as defined by the claims. The present disclosure is defined by the appended claims, and the equivalents of these claims are also contained therein.

## Claims

1. A seat assembly for a motor vehicle, **characterized in that** the seat assembly comprises:
a seat cushion;
a seat backrest; and
a linkage mechanism configured to move the seat cushion and the seat backrest so that the seat assembly is movable between at least two positions;
wherein the linkage mechanism includes a first linkage mechanism for the seat backrest and a second linkage mechanism for the seat cushion;
wherein the first linkage mechanism includes at least one restrained end and at least one movable end, and the first linkage mechanism is configured to be pivotable about a first pivoting portion arranged at a corresponding restrained end among the at least one restrained end of the first linkage mechanism, and a bottom end of the seat backrest that is proximate to the seat cushion is pivotably connected with a corresponding movable end among the at least one movable end of the first linkage mechanism, so that the seat backrest is pivotable relative to the first linkage mechanism about a second pivoting portion arranged at the corresponding movable end of the first linkage mechanism; and
wherein one end or a part of the second linkage mechanism or one end of the seat cushion that is proximate to the seat backrest is connected with the first linkage mechanism, so that pivoting of the first linkage mechanism is capable of causing a corresponding pivoting of the second linkage mechanism.

2. The seat assembly according to claim 1, **characterized in that**,
the restrained end of the first linkage mechanism is pivotably mounted on a vehicle floor, or pivotably mounted on a slide rail that is slidable relative to the vehicle floor to move the seat assembly, or pivotably mounted on a rotary member that is rotatable relative to the vehicle floor so that the seat assembly rotates about a vertical direction.

3. The seat assembly according to claim 2, **characterized in that**,
the seat assembly includes a first backrest driving device and a second backrest driving device, wherein the first backrest driving device drives the first linkage mechanism to pivot about the first pivoting portion, and the second backrest driving device drives the seat backrest to pivot about the second pivoting portion; and when the first backrest driving device and the second backrest driving device do not work, pivoting of the first linkage mechanism about the first pivoting portion and pivoting of the seat backrest about the second pivoting portion are locked.

4. The seat assembly according to claim 3, **characterized in that**,
the first linkage mechanism includes two single-link linkage mechanisms on left and right sides of the seat assembly respectively, wherein each single-link linkage mechanism only includes a single linkage, each linkage includes a movable end and a restrained end that is pivotably mounted on the vehicle floor, the slide rail or the rotary member, and the bottom end of the seat backrest that is proximate to the seat cushion is connected with the movable end of each linkage of the first linkage mechanism, and
wherein the one end or the part of the second linkage mechanism or the one end of the seat cushion that is proximate to the seat backrest is connected with the linkage of the first linkage mechanism;
preferably, each linkage of the first linkage mechanism includes a first member and a second member which are fixed to each other to form the linkage.

5. The seat assembly according to claim 3, **characterized in that**,
the first linkage mechanism includes two four-link linkage mechanisms on left and right sides of the seat assembly respectively, each four-link linkage mechanism includes a first linkage, a second linkage and a third linkage, wherein the first linkage includes a restrained end and a movable end, the second linkage includes a restrained end and a movable end, and the third linkage includes a first foot, a second foot and a third foot,
wherein the restrained end of the first linkage and the restrained end of the second linkage are pivotably mounted on the vehicle floor, the slide rail or the rotary member, the movable end of the first linkage and the movable end of the second linkage are pivotably connected with the first foot and the second foot of the third linkage respectively, and the bottom end of the seat backrest that is proximate to the seat cushion is pivotably connected with the third foot of the third linkage; and
wherein the one end or the part of the second linkage mechanism or the one end of the seat cushion that is proximate to the seat backrest is connected with one of the first linkage and the second linkage of the first linkage mechanism;
preferably, the first backrest driving device drives at least one of the first linkage and the second linkage so that the first linkage and the second linkage pivot about the first pivoting portions at respective restrained ends, and the second backrest driving device drives the seat backrest to pivot about the second pivoting portion at the third foot of the third linkage.

6. The seat assembly according to claim 3, **characterized in that**,
each of the first backrest driving device and the second backrest driving device includes an electric motor and a recliner.

7. The seat assembly according to any one of claims 4 to 6, **characterized in that**,
the second linkage mechanism includes a first linkage, a second linkage and a third linkage, wherein the first linkage of the second linkage mechanism includes a first movable end and a second movable end, the second linkage of the second linkage mechanism includes a first movable end and a second movable end, and the third linkage of the second linkage mechanism includes a restrained end and a movable end,
wherein the first movable end of the first linkage of the second linkage mechanism is pivotably connected with the first linkage mechanism, one end of the seat cushion that is proximate to the seat backrest is pivotably connected with the second movable end of the first linkage of the second linkage mechanism, and another end of the seat cushion that is remote from the seat backrest is pivotably connected with the first movable end of the second linkage of the second linkage mechanism, the second movable end of the second linkage of the second linkage mechanism is pivotably connected with the movable end of the third linkage of the second linkage mechanism, and the restrained end of the third linkage of the second linkage mechanism is pivotably mounted on the vehicle floor, the slide rail or the rotary member.

8. The seat assembly according to claim 7, **characterized in that**,
the seat assembly includes a first cushion driving device and a second cushion driving device, wherein the first cushion driving device drives the first linkage of the second linkage mechanism so that the first linkage of the second linkage mechanism is also pivotable relative to the first linkage mechanism, and the second cushion driving device drives one of the second linkage and the third linkage of the second linkage mechanism;
preferably, one of the second linkage and the third linkage of the second linkage mechanism is configured as a zero-gravity linkage for realizing a zero-gravity position of the seat assembly.

9. The seat assembly according to claim 8, **characterized in that**,
the seat assembly is configured to be movable between a designed position, a height-adjusted position, a first zero-gravity position, a second zero-gravity position, a first folded position, a second folded position, a first lying flat position, a second lying flat position and an easy entry position,
in the designed position, the seat backrest of the seat assembly forms a predetermined angle relative to the seat cushion for supporting the occupant;
in the height-adjusted position, the seat cushion of the seat assembly is raised or lowered by a predetermined height in a height direction compared with the designed position;
in the first zero-gravity position and the second zero-gravity position, the seat assembly is adjusted to a designed zero-pressure state, wherein the second zero-gravity position is higher than the first zero-gravity position;
in the first folded position and the second folded position, the seat backrest of the seat assembly is substantially overlapped with the seat cushion to increase a space of the motor vehicle, wherein a rear portion of the seat assembly is higher in the second folded position than in the first folded position, so that the seat assembly is capable of serving as a pedal for a rear occupant;
in the first lying flat position and the second lying flat position, the seat backrest of the seat assembly is substantially flush with the seat cushion, wherein the second lying flat position is higher than the first lying flat position; and
in the easy entry position, the seat backrest of the seat assembly pivots towards the seat cushion by a predetermined angle relative to the designed position and/or the seat cushion moves forward by a predetermined distance relative to the designed position, so as to increase a space behind the seat assembly to facilitate access of an occupant.

10. The seat assembly according to claim 8, **characterized in that**,
the first cushion driving device is selected from at least one of a direct drive motor, a combination of a direct drive motor and a sector rack, a lead screw motor, and a combination of a direct drive motor and a spur rack.

11. The seat assembly according to claim 7, **characterized in that**,
the first linkage of the second linkage mechanism is composed of two members that are fixed to each other.

12. The seat assembly according to any one of claims 4 to 6, **characterized in that**,
the second linkage mechanism includes a first linkage and a second linkage, wherein the first linkage of the second linkage mechanism includes a first movable end and a second movable end, and the second linkage of the second linkage mechanism includes a restrained end and a movable end,
wherein the first movable end of the first linkage of the second linkage mechanism is pivotably connected with a corresponding linkage of the first linkage mechanism, the restrained end of the second linkage of the second linkage mechanism is pivotably mounted on the vehicle floor, the slide rail or the rotary member, and one end of the seat cushion that is proximate to the seat backrest is pivotably connected with the second movable end of the first linkage of the second linkage mechanism, and another end of the seat cushion that is remote from the seat backrest is pivotably connected with the movable end of the second linkage of the second linkage mechanism.

13. The seat assembly according to any one of claims 4 to 6, **characterized in that**,
the second linkage mechanism includes a first linkage and a second linkage, wherein the first linkage of the second linkage mechanism includes a first movable end and a second movable end, and the second linkage of the second linkage mechanism includes a restrained end and a movable end,
wherein one end of the seat cushion that is proximate to the seat backrest is pivotably connected with a corresponding linkage of the first linkage mechanism, another end of the seat cushion that is remote from the seat backrest is pivotably connected with the first movable end of the first linkage of the second linkage mechanism, the second movable end of the first linkage of the second linkage mechanism is pivotably connected with the movable end of the second linkage of the second linkage mechanism, and the restrained end of the second linkage of the second linkage mechanism is pivotably mounted on the vehicle floor, the slide rail or the rotary member;
preferably, the second linkage of the second linkage mechanism is configured as a zero-gravity linkage for realizing a zero-gravity position of the seat assembly.

14. The seat assembly according to any one of claims 4 to 6, **characterized in that**,
the second linkage mechanism includes a chute, a first linkage and a second linkage, wherein the chute is fixed on a corresponding linkage of the first linkage mechanism, one end of the seat cushion that is proximate to the seat backrest is slidably arranged in the chute,
the first linkage of the second linkage mechanism includes a first movable end and a second movable end, and the second linkage of the second linkage mechanism includes a movable end and a restrained end, wherein another end of the seat cushion that is remote from the seat backrest is pivotably connected with the first movable end of the first linkage of the second linkage mechanism, the second movable end of the first linkage of the second linkage mechanism is pivotably connected with the movable end of the second linkage of the second linkage mechanism, and the restrained end of the second linkage of the second linkage mechanism is pivotably mounted on the vehicle floor, the slide rail or the rotary member;
preferably, the second linkage of the second linkage mechanism is configured as a zero-gravity linkage for realizing a zero-gravity position of the seat assembly.

15. The seat assembly according to any one of claims 4 to 6, **characterized in that**,
the second linkage mechanism includes a chute and a first linkage, wherein the chute is fixed on a corresponding linkage of the first linkage mechanism, and one end of the seat cushion that is proximate to the seat backrest is slidably arranged in the chute, and
the first linkage of the second linkage mechanism includes a restrained end and a movable end, wherein another end of the seat cushion that is remote from the seat backrest is pivotably connected with the movable end of the first linkage of the second linkage mechanism, and the restrained end of the first linkage of the second linkage mechanism is pivotably mounted on the vehicle floor, the slide rail or the rotary member.
